(19) Europäisches Patentamt
European Patent Office
Office européen des brevets

(11) Veröffentlichungsnummer: **0 141 225**
**B1**

(12) # EUROPÄISCHE PATENTSCHRIFT

(45) Veröffentlichungstag der Patentschrift: **28.12.88**

(51) Int. Cl.⁴: **C 08 F 8/32**

(21) Anmeldenummer: **84111215.4**

(22) Anmeldetag: **20.09.84**

(54) **Verfahren zum Vernetzen von chlorlertem Polyethylen.**

(30) Priorität: **08.10.83 DE 3336753**

(43) Veröffentlichungstag der Anmeldung:
**15.05.85 Patentblatt 85/20**

(45) Bekanntmachung des Hinweises auf die Patenterteilung:
**28.12.88 Patentblatt 88/52**

(84) Benannte Vertragsstaaten:
**AT BE CH DE FR GB IT LI LU NL SE**

(56) Entgegenhaltungen:
**DE-A- 2 845 125**
**US-A- 3 261 784**

(73) Patentinhaber: **RHEIN-CHEMIE RHEINAU GMBH, Postfach 81 04 09 Mülheimer Strasse 24-28, D-6800 Mannheim 81 (DE)**

(72) Erfinder: **Sauerbier, Michael, Dr., Lochwiesenstrasse 4, D-6701 Altrip (DE)**
Erfinder: **Ehrend, Helfried, Leharstrasse 17, D-6720 Speyer (DE)**

(74) Vertreter: **Jochum, Axel et al, c/o BAYER AG Zentralbereich Patente, Marken und Lizenzen, D-5090 Leverkusen 1, Bayerwerk (DE)**

**EP 0 141 225 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum Vernetzen von chloriertem Polyethylen mit Hilfe von 2,5-Dimercapto-1,3,4-thiadiazol oder 2,5-Dimercapto-1,3,4-thiadiazol-Derivaten (DMTD), beispielsweise dem Mono-benzoylderivat und bestimmten Amidaminen.

Aus den deutschen Offenlegungsschriften 27 54 060 und 28 45 125 ist bekannt, gesättigte, halogenhaltige Polymerisate durch Erhitzen in Gegenwart von DMTD und eines basischen Materials zu vernetzen. Als basisches Material wird insbesondere eine Kombination aus einer organischen Base und einer anorganischen Base verwendet, wobei als organische Base ein Amin mit einem Siedepunkt über etwa 110 °C und einem pK-Wert unter etwa 4,5 in Frage kommt. Als bevorzugte Amine werden dabei Dicyclohexylamin und ein Umsetzungsprodukt aus Anilin und Butyraldehyd angegeben.

Diese Amine sind als stark ätzende organische Flüssigkeiten in ihrer Handhabung problematisch und lassen sich nur schwierig in Kautschukmischungen einmischen.

Bei der Vernetzung von chloriertem Polyethylen zeigt sich darüber hinaus, dass bei der Verwendung dieser Amine unbefriedigende Vulkanisateigenschaften, starke Formverschmutzung bei der Herstellung von Formartikeln und schlechte Entformbarkeit beobachtet werden.

Aufgabe der Erfindung ist es daher, für die Vernetzung von chloriertem Polyethylen unter Verwendung von DMTD leistungsfähigere Aktivatoren zur Verfügung zu stellen.

Die Aufgabe wird dadurch gelöst, dass man als aktivierendes basisches Material Amidamine der Formel

$$R\text{–}CO\text{–}NH\text{–}(CH_2\text{–}CH_2\text{–}NH)_n\text{–}R_1 \qquad (I)$$

worin

R einen gesättigten oder ungesättigten Kohlenwasserstoffrest mit 6 bis 22 C-Atomen,

$R_1$ Alkyl, Aryl, Cycloalkyl, Aralkyl oder $R\text{–}CO\text{–}NH\text{–}CH_2\text{–}CH_2\text{–}$ und

n eine ganze Zahl von 1 bis 10 bedeuten, einsetzt.

Gegenstand der Erfindung ist daher ein Verfahren zum Vernetzen von chloriertem Polyethylen in Gegenwart von DMTD und eines basischen Materials, dadurch gekennzeichnet, dass das basische Material ein Amidamin der Formel

$$R\text{–}CO\text{–}NH\text{–}(CH_2\text{—}CH_2\text{–}NH)_n\text{–}R_1 \qquad (I)$$

ist, worin

R einen gesättigten oder ungesättigten Kohlenwasserstoffrest mit 6 bis 22 C-Atomen,

$R_1$ Alkyl, Aryl, Cycloalkyl, Aralkyl oder $R\text{–}CO\text{–}NH\text{–}CH_2\text{–}CH_2\text{–}$ und

n eine ganze Zahl von 1 bis 10 bedeuten.

Alkyl kann gradkettig oder verzweigt sein und hat insbesondere 1 bis 18 C-Atome; Aryl hat vorzugsweise 6 bis 12 C-Atome und kann Substituenten wie Halogen, $C_1$–$C_4$-Alkyl, Nitro, Cyano oder $C_1$–$C_4$-Alkoxy tragen; Cycloalkyl hat vorzugsweise 5 bis 8 C-Atome; Aralkyl hat insbesondere 7 bis 12 C-Atome und kann im Arylteil wie das verstehend genannte Aryl substituiert sein.

Bevorzugte Verbindungen der Formel I entsprechen der Formel II

$$R_2\text{–}CO\text{–}(NH\text{–}CH_2\text{–}CH_2)_m\text{–}NH\text{–}CO\text{–}R_3 \qquad (II)$$

worin

$R_2$ und $R_3$ gleich oder verschieden sind und für geradkettiges, gesättigtes Alkyl mit 8 bis 18 C-Atomen und

m für eine ganze Zahl 2 bis 5 stehen.

Die Verbindungen der Formeln I und II sind im allgemeinen feste, nicht ätzende Substanzen, die sich leicht in Kautschukmischungen einarbeiten lassen.

Das Amidamin wird vorzugsweise in einer Menge von 1 bis 5 Gew.-%, insbesondere 2 bis 4,5 Gew.-%, bezogen auf Kautschuk, eingesetzt. DMTD wird vorzugsweise in einer Menge von 1 bis 4 Gew.-%, insbesondere 2 bis 3 Gew.-%, bezogen auf Kautschuk, eingesetzt.

Bezüglich der Eigenschaften und Einsatzgebiete von chloriertem Polyethylen, nach ASTM-D 1418 CM bezeichnet, wird auf E. Rohde, Kautschuk + Gummi, Kunststoffe 35, 1982, S. 478 ff, verwiesen.

CM ist ein durch Suspensionschlorierung von Niederdruck-Polyethylen hergestelltes chloriertes Polyethylen mit einem Chlorgehalt von etwa 25 und 45 Gew.-%.

Beispiel 1

Die Vulkameter-Prüfung nach DIN 53 529 zeigt, dass das erfindungsgemässe Tetraethylenpentamin-distearat eine grössere aktivierende Wirkung zeigt als das Anilin/Butyraldehyd-Kondensationsprodukt und als das zum Vergleich herangezogene Ethylendiamin-distearat, das keine freien Aminogruppen aufweist. Es wurde die folgende Kautschukmischung geprüft:

Tabelle 1:

| | a | b | c | d | e |
|---|---|---|---|---|---|
| Chloriertes Polyethylen | 100 | 100 | 100 | 100 | 100 |
| MgO | 10 | 10 | 10 | 10 | 10 |
| Russ | 40 | 40 | 40 | 40 | 40 |
| Kaolin | 80 | 80 | 80 | 80 | 80 |
| arom. Mineralöl | 40 | 40 | 40 | 40 | 40 |
| DMTD | 2.5 | 2.5 | 2.5 | 2.5 | 2.5 |

Tabelle 1 (Fortsetzung):

| | a | b | c | d | e |
|---|---|---|---|---|---|
| Anilin/Butyraldehyd-Kondensationsprodukt | 1.5 | 3.0 | – | – | – |
| Ethylendiamin-distearat | – | – | 3.0 | – | – |
| Tetraethylenpentamin-distearat | – | – | – | 3.0 | – |
| Vulkameterprüfung n.DIN 53529 | | | | | |
| $t_5$/180 °C (min) | 2.6 | 2.5 | 8.7 | 2.2 | 12.0 |
| $t_{50}$/180 °C (min) | > 12.0 | 7.5 | n.m | 4.8 | n.m |
| $F_5$/180 °C (dN.m) | 46.5 | 65.8 | 23.7 | 77.3 | 31.0 |

*) n.m. = nicht messbar.

Beispiel 2

Dies Beispiel zeigt, dass mit den erfindungsgemässen Amidamin-Derivaten höhere Vernetzungsgrade und deutlich günstigere physikalischtechnologische Eigenschaften der Vulkanisate erreicht werden. Es wurde ausserdem beobachtet, dass Formteile, die mit Hilfe der erfindungsgemässen Amidamine hergestellt worden waren, sich leichter entformen liessen und geringere Formverschmutzung zeigten, als Formteile, die mit den vorbekannten Aminen hergestellt worden waren. Die erfindungsgemässen Aktivatoren gestatten eine sehr schnelle Vulkanisation, wobei höhere Zugfestigkeiten und geringere Druckverformungsreste erhalten werden. Ausserdem wird das Alterungsverhalten, erkennbar an dem geringen Abfall der Bruchdehnung nach einer Lagerung in Heissluft (7 Tage/125 °C), positiv beeinflusst.

Tabelle 2:

| | a | b | c | d |
|---|---|---|---|---|
| Chloriertes Polyethylen | 100 | 100 | 100 | 100 |
| MgO | 10 | 10 | 10 | 10 |
| Rup | 40 | 40 | 40 | 40 |
| Kaolin | 80 | 80 | 80 | 80 |
| arom. Mineralöl | 40 | 40 | 40 | 40 |
| DMTD | 2.5 | 2.5 | 2.5 | 2.5 |
| Dicyclohexylamin | 1.5 | – | – | – |
| Anilin/Butyraldehyd-Kondensationsprodukt | – | 1.5 | – | – |
| Pentaethylenhexamin-distearat | – | – | 3 | – |
| Tetraethylenpentamin-distearat | – | – | – | 3 |
| Vulkameterprüfung n.DIN 53529: | | | | |
| $t_5$/180 °C (min) | 1.9 | 3.0 | 1.7 | 1.9 |
| $F_5$/180 °C (dN.m) | 78 | 34 | 81 | 72 |
| Mischungen 4 Wochen gelagert bei RT: | | | | |
| $t_5$/180 °C (min) | 1.4 | 2.0 | 1.5 | 1.6 |
| $F_5$/180 °C (dN.m) | 66 | 46 | 87 | 81 |
| Vulkanisation 20 min/160 °C: | | | | |
| Härte (Shore A) | 75 | 78 | 72 | 70 |
| Zugfestigkeit (MPa) | 12.3 | 8.5 | 13.4 | 13.5 |
| Bruchdehnung (%) | 540 | 510 | 560 | 570 |
| Druckverformungsrest: | | | | |
| 70 h/100 °C (%) | 44 | 73 | 39 | 36 |
| Heissluftalterung 7d/125 °C: | | | | |
| △ Zugfestigkeit (%) | 16 | 35 | 18 | 16 |
| △ Bruchdehnung (%) | 50 | 65 | 36 | 37 |

Beispiel 3

Dieses Beispiel zeigt die Variationsbreite der erfindungsgemässen Aktivator-Substanzen bei der Vernetzung von chloriertem Polyethylen. Je nach gewünschter Verarbeitungssicherheit beträgt die Dosierung zwischen 2 und 4,5 Gew.-%, bezogen auf Kautschuk, bei einer Dosierung von DMTD von 2,5 Gew.-%, ebenfalls bezogen auf Kautschuk.

Tabelle 3:

| | a | b | c | d | e |
|---|---|---|---|---|---|
| Chloriertes Polyethylen | 100 | 100 | 100 | 100 | 100 |
| MgO | 10 | 10 | 10 | 10 | 10 |
| Russ | 40 | 40 | 40 | 40 | 40 |
| Kaolin | 80 | 80 | 80 | 80 | 80 |
| arom. Mineralöl | 40 | 40 | 40 | 40 | 40 |
| DMDT | 2.5 | 2.5 | 2.5 | 2.5 | 2.5 |
| Tetraethylenpentamin-diastearat | 1.5 | 2.25 | 3.0 | 3.75 | 4.5 |
| Vulkameterprüfung n.DIN 53 529: | | | | | |
| $t_5$/180 °C (min) | 4.0 | 2.6 | 2.5 | 1.4 | 1.0 |
| $F_5$/180 °C (dN.m) | 25.0 | 45.5 | 49.5 | 88.5 | 92.5 |
| Vulkanisation 20 min/160 °C: | | | | | |
| Härte (Shore A) | 71 | 73 | 72 | 72 | 70 |
| Zugfestigkeit (MPa) | 9.1 | 12.5 | 11.9 | 13.2 | 13.0 |
| Bruchdehnung (%) | 640 | 610 | 600 | 520 | 510 |
| Druckverformungsrest: 70 h/100°C | 94 | 64 | 66 | 44 | 48 |
| Heissluftalterung 7d/125 °C: | | | | | |
| △ Zugfestigkeit (%) | 8 | 13 | 10 | 11 | 6 |
| △ Bruchdehnung (%) | 39 | 38 | 35 | 21 | 24 |

**Patentansprüche**

1. Verfahren zum Vernetzen von chloriertem Polyethylen in Gegenwart von 2,5 Dimercapto-1,3,4-thiadiazol oder einem DMTD-Derivat und eines basischen Materials, dadurch gekennzeichnet, dass das basische Material ein Amidamin der Formel

$$R-CO-NH-(CH_2-CH_2-NH)_n-R_1$$

ist, worin

R einen gesättigten oder ungesättigten Kohlenwasserstoffrest mit 6 bis 22 C-Atomen,

$R_1$ Alkyl, Aryl, Cycloalkyl, Aralkyl oder $R-CO-NH-CH_2-CH_2-$ und

n eine ganze Zahl von 1 bis 10 bedeuten.

2. Verfahren nach Anspruch 1, dadurch gekennzeichnet, dass das Amidamin der Formel

$$R_2-CO-(NH-CH_2-CH_2)_m-NH-CO-R_3$$

entspricht worin

$R_2$ und $R_3$ gleich oder verschieden sind und für geradkettiges, gesättigtes Alkyl mit 8 bis 18 C-Atomen und

m für eine ganze Zahl 2 bis 5 stehen.

**Claims**

1. A process for crosslinking chlorinated polyethylene in the presence of 2,5-dimercapto-1,3,4-thiadiazole or a DMTD derivative and a basic material, characterized in that the basic material is an amido amine corresponding to the following formula

$$R-CO-NH-(CH_2-CH_2-NH)_n-R_1$$

in which

R is a saturated or unsaturated hydrocarbon radical containing from 6 to 22 carbon atoms,

$R_1$ represents alkyl, aryl, cycloalkyl, aralkyl or $R-CO-NH-CH_2-CH_2-$ and

n is an integer of from 1 to 10.

2. A process as claimed in Claim 1, characterized in that the amido amine corresponds to the following formula

$$R_2-CO-(NH-CH_2-CH_2)_m-NH-CO-R_3$$

in which

$R_2$ and $R_3$ may be the same or different and represent a straight-chain, saturated alkyl radical containing from 8 to 18 carbon atoms and

m is an integer of from 2 to 5.

## Revendications

1. Procédé pour réticuler le polyéthylène chloré en présence du 2,5-dimercapto-1,3,4-thiadiazole ou d'un dérivé du DMTD et d'une matière basique, caractérisé en ce que la matière basique est une amidamine de formule

$$R-CO-NH-(CH_2-CH_2-NH)_n-R_1$$

dans laquelle

R représente un radical hydrocarboné saturé ou insaturé en $C_6$–$C_{22}$,

$R_1$ représente un groupe alkyle, aryle, cycloalkyle, aralkyle ou $R-CO-NH-CH_2-CH_2-$ et

n est un nombre entier allant de 1 à 10

2. Procédé selon la revendication 1, caractérisé en ce que l'amidamine répond à la formule

$$R_2-CO-(NH-CH_2-CH_2)_m-NH-CO-R_3$$

dans laquelle

$R_2$ et $R_3$, ayant des significations identiques ou différentes, représentent chacun un groupe alkyle saturé à chaîne droite en $C_8$–$C_{18}$, et

m est un nombre entier allant de 2 à 5.